# DEMANDE DE BREVET EUROPEEN

(11) **EP 1 018 583 A1**
(43) Date de publication de la demande: **12.07.2000**
(21) Numéro de dépôt: 00420001.0
(22) Date de dépôt: 05.01.2000
(51) Int. Cl.: E04F 17/02, B28B 17/00, F16L 9/10, F16L 9/19

(54) **Boisseau de cheminée et procédé pour obtenir un tel boisseau**

(30) Priorité: 05.01.1999 FR 9900112
(71) Demandeur: L'INDUSTRIELLE REGIONALE DU BATIMENT, 69760 Limonest (FR)
(72) Inventeur: Ferragut, Christoph, 42170 St Just St Rambert (FR); Menier, Gérard, 42130 Boen (FR)
(74) Mandataire: Maureau, Philippe

(57) **Abrégé**

Un boisseau de cheminée selon l'invention comporte une enveloppe extérieure (4), un conduit intérieur (2) ainsi qu'une couche (6) de matériau isolant séparant l'enveloppe (4) du conduit (2).

Le conduit intérieur (2) et l'enveloppe extérieure (4) sont réalisés dans un même matériau. Des ruptures correspondant à la présence préalable de pontets (10) se trouvent sur la face extérieure du conduit intérieur (2) et sur la face intérieure de l'enveloppe extérieure (4).

Ce boisseau est obtenu à partir d'un élément (12) comportant un conduit intérieur (2), une enveloppe extérieure (4) et des pontets (10) reliant ces deux pièces. Les pontets (10) sont rompus et le conduit intérieur (2), entouré d'une couche (6) de matériau isolant, est fixé dans l'enveloppe extérieure (4).

## Description

La présente invention concerne un boisseau de cheminée en terre cuite et un procédé pour obtenir un tel boisseau.

Le refroidissement trop important des gaz de combustion entre le générateur de chaleur et le débouché de la cheminée peut être à l'origine d'un mauvais fonctionnement de l'appareil de chauffage et favorise la condensation des fumées le long de la paroi du conduit.

Or ces dernières années, les constructeurs d'appareils de chauffage se sont efforcés d'améliorer le rendement de leurs générateurs et limitant les pertes calorifiques par la cheminée avec l'abaissement de la température des gaz de combustion.

Pour ces raisons, la réglementation actuelle exige que la résistance thermique des parois d'un conduit atteigne au minimum 0,43 m²°C/W lorsque le conduit est bâti hors d'une zone chauffée (par exemple : conduit extérieur, souche, traversée de combles non chauffés...).

Une isolation directement réalisée sur chantier n'est pas aisée, et le coût global de l'intervention est assez élevé.

À ce jour, il existe deux boisseaux de cheminée en terre cuite dont l'isolation est prévue lors de leur façonnage en usine. Pour l'un, des panneaux isolants sont introduits à la mise en oeuvre dans des alvéoles profilées dans le boisseau à cet effet. Pour l'autre, un boisseau alvéolé traditionnel est habillé en usine avec une enveloppe isolante recouverte d'un enduit ciment lissé sur treillis métallique. La mise en oeuvre de ce produit nécessite la présence d'un treillis de liaison à chaque jonction.

Ces solutions sont avantageuses pour le bâtisseur, mais le façonnage de ces boisseaux pré-isolés est coûteux pour le fabricant ; certaines opérations ne pouvant difficilement être automatisées.

Par ailleurs, ces deux concepts ne prévoient pas la ventilation de l'isolant, ce qui est préférable pour garantir les performances de ce dernier.

Le document DE-34 37 022 décrit un boisseau de cheminée comportant une enveloppe extérieure de section sensiblement carrée, un conduit intérieur cylindrique circulaire et une couche de matériau isolant séparant l'enveloppe du conduit. Ce boisseau est réalisé en béton. Des pontets ponctuels, de faible hauteur, relient le conduit et l'enveloppe. Ces pontets sont destinés à être rompus juste avant le montage du boisseau.

Un tel boisseau ne peut pas être obtenu par filage. Il est obtenu par moulage. Les techniques mises en oeuvre pour la réalisation d'un tel boisseau sont tout à fait différentes de celles utilisées pour réaliser des boisseaux de cheminée en terre cuite.

Si le monteur oublie de rompre les pontets, ces derniers créent des ponts thermiques entre le conduit intérieur et l'enveloppe extérieure. Ceci est très défavorable tant en ce qui concerne la résistance thermique des parois de la cheminée que pour la condensation. En outre, le boisseau décrit ici ne prévoit pas la ventilation de l'isolant.

La présente invention a pour but de fournir un boisseau en terre cuite, pouvant être obtenu par filage, à isolation ventilée, facile à mettre en oeuvre et dont la production est simplifiée pour le fabricant.

À cet effet, elle propose un boisseau de cheminée on matériau céramique à base d'argile comportant une enveloppe extérieure, un conduit intérieur ainsi qu'éventuellement une couche de matériau isolant séparant l'enveloppe du conduit.

Selon l'invention, le conduit intérieur et l'enveloppe extérieure sont réalisés dans ce matériau céramique, des ruptures correspondant à la présence préalable de pontets se trouvant sur la face extérieure du conduit intérieur et sur la face intérieure de l'enveloppe extérieure sur toute la hauteur de ce conduit et de cette enveloppe.

La réalisation du boisseau à partir d'un élément comprenant le conduit intérieur et l'enveloppe extérieure permet de fabriquer en une seule opération de filage ces deux parties du boisseau. Il n'est donc plus nécessaire de fabriquer séparément un conduit intérieur et une enveloppe extérieure. La fabrication de ces pièces pouvant être faite en une seule opération permet un abaissement sensible du prix de revient.

Pour réaliser une meilleure isolation thermique du boisseau, l'enveloppe extérieure est de préférence alvéolée. On peut également prévoir une paroi de conduit alvéolée.

Avantageusement, au moins un conduit de ventilation est prévu entre le matériau isolant et l'enveloppe extérieure, afin d'éviter des problèmes de condensation au niveau de la couche de matériau isolant.

Le matériau isolant est choisi par exemple parmi l'ensemble de matériaux comprenant la laine de verre et la laine de roche. Avantageusement, on préférera les isolants à fibres orientées perpendiculairement au flux de déperdition thermique du conduit (fibres orientées parallèlement aux parois). Le matelas isolant est logé de préférence en usine entre le conduit et l'enveloppe extérieure après rupture des pontets nécessaires pour la fabrication.

Pour faciliter le positionnement de deux boisseaux de cheminée selon l'invention voisins, le conduit intérieur est avantageusement décalé axialement par rapport à l'enveloppe extérieure. Il y a alors un décalage des plans de joint entre le conduit et l'enveloppe extérieure.

Lorsque les deux parties du boisseau sont libérées par rupture des pontets, celles-ci sont maintenues en plan à des niveaux différents au cours de l'introduction de l'isolant. La simple compression ou le collage de l'isolant permettra de conserver en position déportée le conduit et l'enveloppe.

Ainsi, avec une forme de réalisation d'un boisseau selon l'invention, le conduit intérieur et l'enveloppe extérieure sont réalisés en terre cuite ; le façonnage de ces deux éléments étant effectué simultanément par extrusion à travers une filière. Des pontets avec amorces de rupture relient les deux parties durant l'étirage, le séchage et la cuisson.

Si une partie du conduit est bâtie à l'intérieur d'une zone tempérée (non froide), l'isolation n'étant plus obligatoire dans ce cas, le boisseau peut être utilisé sans isolant, donc sans rupture des pontets de liaison. De ce fait, de la base au sommet du conduit, quelles que soient les exigences d'isolation, les dimensions extérieures périphériques seront conservées.

La présente invention concerne également un élément destiné à la réalisation d'un boisseau tel que décrit ci-dessus. Cet élément comporte d'un seul tenant et en matériau céramique à base d'argile, une enveloppe extérieure éventuellement alvéolée, un conduit intérieur et des pontets ruptibles de liaison reliant sur toute leur hauteur le conduit à l'enveloppe. Pour permettre un meilleur séchage de cet élément, notamment lorsque celui-ci est réalisé dans un matériau céramique à base d'argile, le conduit intérieur est centré par rapport à l'enveloppe extérieure.

L'invention propose aussi un procédé pour réaliser un boisseau de cheminée tel que décrit ci-dessus. Ce procédé comporte les étapes suivantes :
- réalisation d'un élément (conduit et enveloppe) tel que décrit plus haut par filage,
- rupture éventuelle des pontets reliant le conduit intérieur à l'enveloppe extérieure,
- mise en place d'une couche de matériau isolant entre le conduit intérieur et l'enveloppe extérieure dans le cas où le boisseau est isolé.

De toute façon, l'invention sera bien comprise à l'aide de la description qui suit, en référence au dessin schématique annexé, représentant à titre d'exemple non limitatif une forme d'exécution préférée d'un boisseau selon l'invention.
Figure 1 est une vue en perspective d'un élément servant à réaliser un boisseau, et
Figure 2 est une vue en perspective d'un boisseau selon l'invention.

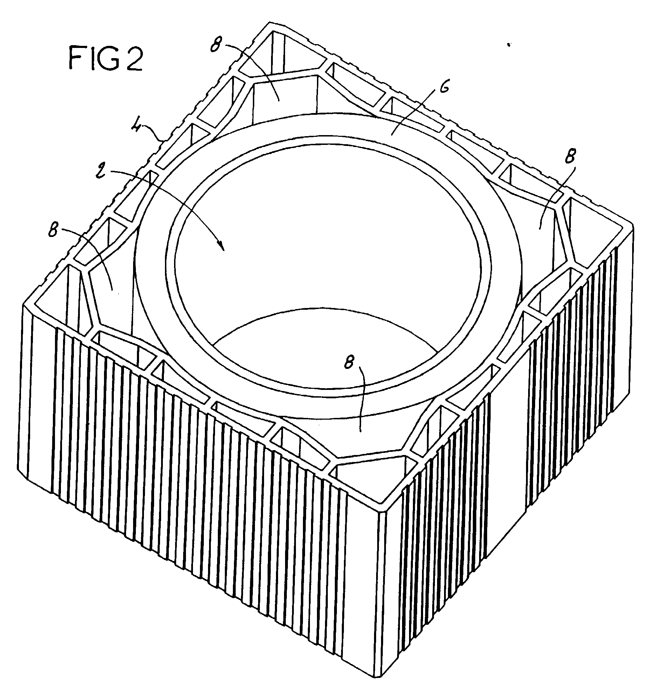

La figure 2 représente un boisseau de cheminée comportant un conduit intérieur 2, une enveloppe extérieure 4 et une couche 6 de laine de verre ou de laine de roche. Cette dernière est disposée entre le conduit intérieur 2 et l'enveloppe extérieure 4 afin d'isoler thermiquement le conduit 2 et l'enveloppe 4.

Le conduit intérieur 2 est de forme cylindrique circulaire. Il est réalisé dans un matériau céramique à base d'argile. Il est destiné à conduire des gaz issus d'une combustion, par exemple une combustion réalisée dans un foyer ouvert -cheminée d'appartement ou autre-.

L'enveloppe extérieure 4 est elle aussi réalisée en matériau céramique à base d'argile. Elle présente une surface intérieure sensiblement cylindrique circulaire, d'un diamètre plus important que le diamètre extérieur du conduit 2, et une surface extérieure cylindrique de section carrée. L'espace entre les surfaces intérieure et extérieure de l'enveloppe 4 est alvéolé. Les alvéoles s'étendent dans le sens axial du boisseau.

Au niveau des quatre angles de l'enveloppe 2, la surface intérieure de celle-ci présente une rainure axiale relativement grande formant ainsi un conduit de ventilation 8 pour la couche 6 de laine minérale. Ces conduits de ventilation 8 permettent d'éviter des problèmes de condensation au niveau de la couche 6 de laine minérale.

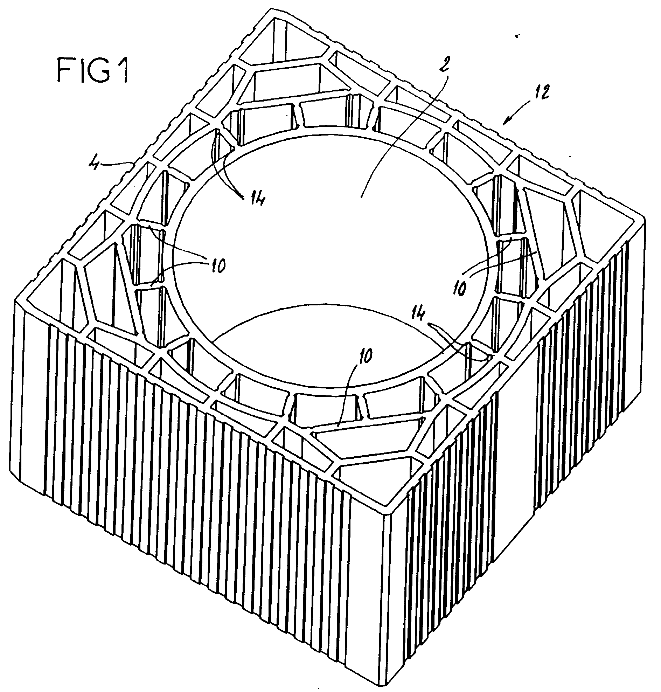

La surface extérieure du conduit intérieur 2 et la surface intérieure de l'enveloppe extérieure 4 présentent des ruptures (non représentées), s'étendant axialement sur toute la hauteur du conduit et de l'enveloppe. Ces ruptures témoignent de la présence préalable de pontets 10 que l'on peut voir sur la figure 1. L'élément 12 représenté sur cette figure a une forme sensiblement identique à celle du boisseau décrit ci-dessus. Cet élément 12 comporte le même conduit intérieur 2 et la même enveloppe extérieure 4. On ne retrouve pas de couche 6 de laine minérale mais les pontets 10. Ces derniers relient le conduit 2 à l'enveloppe 4 de manière à ne former qu'une seule unité. Ils présentent des zones de ruptures 14 à leurs deux extrémités. On constate que le conduit 2 est en position centrée par rapport à l'enveloppe extérieure, de telle sorte que le conduit 2 occupe la même place dans l'élément 12 que dans le boisseau. On obtient de cette manière un élément 12 symétrique par rapport à l'axe du conduit intérieur 2.

L'élément 12 représenté sur la figure 1 est obtenu par extrusion à travers une filière. À la sortie de la filière, des éléments 12 sont coupés à la longueur souhaitée, puis séchés et cuits de manière traditionnelle. Pour réaliser le boisseau de la figure 2 à partir d'un élément 12, les pontets 10 sont cassés, de manière à supprimer toute liaison entre le conduit 2 et l'enveloppe 4. Une rupture se réalise au niveau des zones de rupture 14. Pour casser les pontets 10, on peut par exemple utiliser un outil présentant des doigts destinés chacun à venir prendre place dans une des alvéoles formées par les pontets 10 entre la surface extérieure du conduit 2 et la surface intérieure de l'enveloppe 4. Cet outil présente une forme rappelant une cage d'écureuil. Un mouvement relatif entre l'élément 12 et l'outil, par exemple une rotation autour de l'axe de symétrie de l'élément, permet de rompre au niveau des zones de rupture 14 les pontets 10. Pour permettre de réaliser les conduits de ventilation 8, on constate sur la figure 1 la présence d'un pontet en forme de T à chaque coin de l'enveloppe extérieure 4. Pour tenir compte de ces pontets en forme de T, les doigts correspondants de l'outil en cage d'écureuil peuvent par exemple se déplacer radialement en même temps que se réalise la rotation. Une came sur laquelle serait monté le doigt correspondant peut permettre de réaliser ce mouvement combiné.

Une fois le conduit intérieur 2 séparé de l'enveloppe extérieure 4, il suffit d'entourer le conduit d'une couche 6 de laine minérale et de venir fixer cet ensemble dans l'enveloppe extérieure 4.

Pour permettre de plus facilement centrer deux boisseaux voisins, il est possible, au cours de la mise en place de la couche 6, de réaliser un décalage axial entre le conduit intérieur 2 et l'enveloppe extérieure 4. On réalise ainsi sur une face frontale d'un boisseau une nervure annulaire et sur l'autre face frontale de ce boisseau une rainure annulaire de forme correspondante. Ce décalage n'est pas représenté au dessin.

Bien entendu, l'invention ne se limite pas à la forme de réalisation décrite ci-dessus à titre d'exemple non limitatif ; elle en embrasse au contraire toutes les variantes dans le cadre des revendications ci-après.

Ainsi par exemple, la forme du conduit et de l'enveloppe extérieure est donnée à titre d'exemple. D'autres formes sont envisageables (section polygonale, conduit carré, enveloppe ronde, etc..). De même, les matériaux sont donnés à titre indicatif.

Le procédé de réalisation du boisseau, notamment en ce qui concerne la séparation du conduit et de l'enveloppe, est donné comme exemple. D'autres procédés sont envisageables.

## Revendications

1. Boisseau de cheminée en matériau céramique à base d'argile comportant une enveloppe extérieure (4), un conduit intérieur (2) ainsi qu'éventuellement une couche (6) de matériau isolant séparant l'enveloppe (4) du conduit (2),
caractérisé en ce que le conduit intérieur (2) et l'enveloppe extérieure (4) sont réalisés dans ce même matériau céramique, des ruptures correspondant à la présence préalable de pontets (10) se trouvant sur la face extérieure du conduit intérieur (2) et sur la face intérieure de l'enveloppe extérieure (4) sur toute la hauteur de ce conduit et de cette enveloppe.

2. Boisseau de cheminée selon la revendication 1, caractérisé en ce que l'enveloppe extérieure (4) est alvéolée.

3. Boisseau de cheminée selon l'une des revendications 1 ou 2, caractérisé en ce que au moins un conduit de ventilation (8) est prévu entre le matériau isolant et l'enveloppe extérieure (4).

4. Boisseau de cheminée selon l'une des revendications 1 à 3, caractérisé en ce que le matériau isolant est choisi parmi l'ensemble de matériaux comprenant la laine de verre et la laine de roche.

5. Boisseau de cheminée selon l'une des revendications 1 à 4, caractérisé en ce que le conduit intérieur (2) est décalé axialement par rapport à l'enveloppe extérieure (4).

6. Élément (12) destiné à la réalisation d'un boisseau selon l'une des revendications 1 à 5, caractérisé en ce qu'il comporte d'un seul tenant et dans un même matériau, une enveloppe extérieure (4) éventuellement alvéolée, un conduit intérieur (2) et des pontets (10) ruptibles de liaison reliant le conduit (2) à l'enveloppe (4).

7. Élément (12) selon la revendication 6, caractérisé en ce que le conduit intérieur (2) est centré par rapport à l'enveloppe extérieure (4).

8. Procédé pour réaliser un boisseau de cheminée selon l'une des revendications 1 à 5, caractérisé en ce qu'il comporte les étapes suivantes :
- réalisation d'un élément (12) selon la revendication 6 ou 7 par filage,
- rupture éventuelle des pontets (10) reliant le conduit intérieur (2) à l'enveloppe extérieure (4),
- mise en place d'une couche (6) de matériau isolant entre le conduit intérieur (2) et l'enveloppe extérieure (4).
